# EUROPÄISCHE PATENTANMELDUNG

(11) **EP 1 186 749 A1**
(43) Veröffentlichungstag der Anmeldung: **13.03.2002**
(21) Anmeldenummer: 00119578.3
(22) Anmeldetag: 07.09.2000
(51) Int. Cl.: F01D 5/28, F02C 7/30

(54) **Strömungsmaschine sowie Turbinenschaufel**

(71) Anmelder: SIEMENS AKTIENGESELLSCHAFT, 80333 München (DE)
(72) Erfinder: Dirauf, Peter, 91056 Erlangen (DE); Kiefer, Wolfgang, 91056 Erlangen (DE); Leuze, Andreas, 91090 Effeltrich (DE); Madl, Peter, 91301 Forchheim (DE); Rosenkranz, Jens, 06333 Hettstedt (DE)

(57) **Zusammenfassung**

Die Erfindung betrifft eine Strömungsmaschine (1) mit einem Strömungskanal (5) für ein Arbeitsfluid (A), welcher von einer Kanalwand (15) mit einer zumindest bereichsweise durch das Arbeitsfluid (A) unbenetzbaren Oberflächenstruktur (47) begrenzt ist. Die Erfindung betrifft weiterhin eine Turbinenschaufel mit einer von einem Arbeitsfluid (A) beaufschlagbaren Schaufeloberfläche (39), wobei die Schaufeloberfläche zumindest bereichsweise eine durch das Arbeitsfluid (A) unbenetzbare Oberflächenstruktur (47) aufweist. Hierbei wird der Lotus-Effekt gezielt ausgenutzt, wobei Strömungsverluste und Verunreinigungen an der Kanalwand (15)vermieden werden.

## Beschreibung

Die Erfindung betrifft eine Strömungsmaschine mit einem Strömungskanal für ein Arbeitsfluid, welcher Strömungskanal von einer Kanalwand begrenzt ist. Die Erfindung betrifft weiterhin eine Turbinenschaufel mit einer von einem Arbeitsfluid beaufschlagbaren Schaufeloberfläche.

Unter Strömungsmaschine wird hier eine Turbomaschine, insbesondere eine Gasturbine oder eine Dampfturbine, ein Kompressor, ein Verdichter oder dergleichen, verstanden.

Es ist für derartige Strömungsmaschinen bekannt, dass diese ein einzelnes Laufrad oder eine Anzahl von in einer Axialrichtung hintereinander angeordneten Laufrädern aufweisen, deren Laufschaufeln in Betrieb von einem gas- oder dampfförmigen Arbeitsfluid umströmt werden. Das Arbeitsfluid übt dabei auf die Laufschaufeln eine Kraft aus, die ein Drehmoment des Lauf- oder Schaufelrades und somit die Arbeitsleitung bewirkt. Dazu sind die Laufschaufeln üblicherweise an einer rotierbaren Welle der Strömungsmaschine angeordnet, deren an entsprechenden Leiträdern oder Leitschaufelträgern angeordnete Leitschaufeln am ruhenden, die Welle unter Bildung eines Strömungskanals umgebenden Gehäuse, das Strömungsmaschinengehäuse, angeordnet sind.

Während bei einem Turboverdichter oder einem Kompressor dem Arbeitsfluid mechanische Energie zugeführt wird, wird bei einer Turbine, z.B. einer Dampfturbine, als Strömungsmaschine dem den Strömungskanal durchströmenden Arbeitsfluid mechanische Energie entzogen.

Es sind verschiedene Mechanismen bekannt, die zu Wirkungsgradverlusten der Strömungsmaschine führen. Beispielsweise ist eine Begrenzung des Wirkungsgrades durch die sogenannten Radialspaltverluste bedingt. So ist bei beispielsweise mit Deckbändern versehenen Schaufeln die statische Druckdifferenz über das entsprechende Schaufelrad in nachteiliger Weise treibend für den über den Radialspalt zwischen dem Deckband und der Berandung des Strömungsgehäuses geführten Leckmassenstrom. Dieser wiederum ist proportional dem dadurch entstehenden Radialspaltverlust. Neben den Spaltverlusten sind Strömungsverluste infolge von Reibungseffekten des Arbeitsfluids bei der Wechselwirkung mit der den Strömungskanal begrenzenden Kanalwand bekannt. Es wurden daher in der Vergangenheit erhebliche Anstrengungen unternommen, die Kanalwand so auszugestalten, dass bei der Wechselwirkung mit dem Arbeitsfluid möglichst geringe Reibungsverluste auftreten. So wurden beispielsweise die Schaufelprofile von Leitschaufeln und Laufschaufeln permanent konstruktiven Verbesserungen unterworfen. Ferner wurde versucht die die Kanalwand bildenden Komponenten mit möglichst glatter Oberfläche zu versehen.

Neben diesen primären Strömungsverlusten, sind sekundäre Strömungsverluste infolge von Querströmungen im Arbeitsfluid sowie aufgrund der inneren Reibung des Arbeitsfluids bekannt.

Im Betrieb einer Strömungsmaschine erfolgt über die Betriebsdauer darüber hinaus ein verschmutzungsbedingter Wirkungsgradabfall. Dieser ist auf den Eintrag von Verunreinigungen in den Strömungskanal und Ablagerung dieser Verunreinigungen auf der Kanalwand zurückzuführen. Die Ursache für diese Verschmutzung ist in der Regel das verunreinigte Arbeitsfluid, beispielsweise der Dampf für eine Dampfturbine oder die Verbrennungsluft in einer Gasturbinenanlage.

Aufgabe der Erfindung ist es, eine hinsichtlich des Wirkungsgrades verbesserte Strömungsmaschine mit einem Strömungskanal für ein Arbeitsfluid, wobei der Strömungskanal von einer Kanalwand begrenzt ist, anzugeben. Dabei soll insbesondere der infolge des Betriebs der Strömungsmaschine verschmutzungsbedingte Wirkungsgradabfall vermindert werden. Eine weitere Aufgabe der Erfindung ist es, eine Turbinenschaufel mit einer von einem Arbeitsfluid beaufschlagbaren Schaufeloberfläche anzugeben.

Die auf eine Strömungsmaschine gerichtete Aufgabe wird erfindungsgemäß gelöst durch eine Strömungsmaschine mit einem Strömungskanal für ein Arbeitsfluid, welcher von einer Kanalwand mit einer zumindest bereichsweise durch das Arbeitsfluid unbenetzbaren Oberflächenstruktur begrenzt ist.

Die Erfindung geht von der Erkenntnis aus, dass die strömungstechnische Qualität der Kanalwand eines Strömungskanals von bedeutendem Einfluss auf den Wirkungsgrad der Strömungsmaschine ist. Eine charakteristische Kennzahl für die Effizienz der Energieumwandlung innerhalb einer Strömungsmaschine ist der isentrope Wirkungsgrad. In den bekannten Strömungsmaschinen ist eine Abnahme des Wirkungsgrades mit zunehmender Betriebszeit zu verzeichnen. Dieser Effekt ist auf eine Verschlechterung der strömungstechnischen Qualität der Kanalwand, beispielsweise der Beschaufelung, durch Ablagerung von Verunreinigungen zurückzuführen.

Mit der Erfindung wird nun ein völlig neuer Weg beschritten, insbesondere dem verschmutzungsbedingten Wirkungsgradabfall der Strömungsmaschine gezielt entgegenzuwirken. Zur Vermeidung dieser Probleme wird die Kanalwand, die im Betrieb der Strömungsmaschine mit dem Arbeitsfluid beaufschlagt ist, gezielt mit einer Oberflächenstruktur versehen. Die Oberflächenstruktur der Kanalwand ist derart, dass diese durch das Arbeitsfluid unbenetzbar ist. Adhäsionskräfte zwischen dem Arbeitsfluid und der Kanalwand, insbesondere der Oberfläche der Kanalwand, sind bei einer unbenetzbaren Oberflächenstruktur nicht vorhanden, zumindest aber deutlich vermindert gegenüber einer herkömmlichen Kanalwand. Dadurch ist der Strömungswiderstand infolge Oberflächenreibung des strömenden Arbeitsfluids entlang der Kanalwand deutlich reduziert. Dies wirkt sich unmittelbar vorteilhaft auf den Wirkungsgrad der Strömungsmaschine aus.

Eine unbenetzbare Oberflächenstruktur kann beispielsweise unter Ausnutzung des sogenannten "Lotus-Effekts" realisiert werden. Während die bekannten Ausgestaltungen der Kanalwand auf die Herstellung einer möglichst glatten, strukturlosen Oberfläche der Kanalwand zur Verminderung des Strömungswiderstandes abzielten, schlägt demgegenüber die Erfindung den Weg einer gezielten Strukturierung der Kanalwand ein. Dadurch wird die Kanalwand zumindest bereichsweise abweisend gegenüber dem Arbeitsfluid. Durch die Strukturierung der Oberfläche, dergestalt, dass diese einen "Lotus-Effekt" bewirkt, wird zudem der Verschmutzung der Kanalwand, beispielsweise der Beschaufelung, entgegengetreten und damit das verschmutzungsbedingte Absinken des Wirkungsgrades vermieden oder zumindest deutlich verringert. Durch die geringere Neigung zur Verschmutzung können somit die Reinigungs-, Wartungs- oder Revisionsmaßnahmen an der Kanalwand, insbesondere an einer Leitschaufel oder einer Laufschaufel der Kanalwand, erheblich reduziert werden. Darüber hinaus können die Intervalle zwischen solchen Maßnahmen erheblich ausgedehnt werden. Möglicherweise ist auch eine Verminderung der Anforderungen an die Aufbereitung des Arbeitsfluids, beispielsweise eines Heißdampfs oder eines Verbrennungsgases, erreichbar. Mit der Strukturierung der Oberfläche der Kanalwand wird somit ein Selbstreinigungseffekt erreicht, da unbenetzbare Oberflächen auch nahezu unverschmutzbar sind. Dieser Zusammenhang wurde erst in jüngster Zeit detailliert untersucht und ist experimentell belegt.

Grundlage des "Lotus-Effektes" sind demzufolge extrem aufgeraute, hydrophobe Oberflächen, an denen Wasser und Partikel praktisch nicht haften. Die Erfindung macht sich diese Erkenntnis zunutze und wendet sie erstmals zur Wirkungsgraderhöhung bzw. Wirkungsgraderhaltung in einer Strömungsmaschine an. Die besondere Strukturierung der Oberfläche der Kanalwand und die Fähigkeit zur Regeneration unterscheiden dieses Konzept grundlegend von herkömmlichen Strömungsmaschinen.

Vorzugsweise weist die Kanalwand eine die Oberflächenstruktur aufweisende Turbinenschaufel auf. Die Turbinenschaufel kann dabei eine Laufschaufel oder eine Leitschaufel der Strömungsmaschine sein. Die Beschaufelung und die Oberfläche der Beschaufelung ist von besonderer Bedeutung für den Wirkungsgrad einer Strömungsmaschine. Daher ist die Ausgestaltung einer Turbinenschaufel mit einer Oberflächenstruktur, die für das Arbeitsfluid unbenetzbar ausgestaltet ist, besonders vorteilhaft. Zudem ist die Beschaufelung üblicherweise besonders empfindlich gegenüber Ablagerungen und Verschmutzungen durch Eintrag von Partikeln mit dem Arbeitsfluid in den Strömungskanal. Eine Revision oder aufwendige Reinigung der Beschaufelung kann somit entfallen oder zumindest auf zeitlich längere Revisionszyklen ausgedehnt werden.

Vorzugsweise ist die Oberflächenstruktur von einer Schicht aus Mikrokristallen, insbesondere epicuticularen Wachskristallen, gebildet, wobei die Schicht eine Oberflächenrauhigkeit aufweist, die gezielt auf eine Unbenetzbarkeit durch das Arbeitsfluid abgestimmt ist.

Hierbei kann die Oberflächenstruktur durch Ausbilden oder Aufbringen einer Schicht, beispielsweise auf einer herkömmlichen Turbinenschaufel, mittels Mikrostrukturierung erfolgen. Alternativ oder zusätzlich kann auf eine zu beschichtende Komponente der Kanalwand die Schicht mittels eines Beschichtungsverfahrens aufgebracht werden. Dabei kommen beispielsweise Mikrokristallstrukturen (Mikrokristallite) in der Größe von typischerweise wenigen um zur Anwendung. Als Beschichtungsmaterial können, wie aus den biologischen Systemen bekannt ist, sogenannte epicutikulare Wachskristalle Anwendung finden. Solche Kristallstrukturen bewirken einen "Lotus-Effekt". Es können aber auch zu den epicuticularen Wachskristallen äquivalente Kristallsysteme zum Einsatz kommen. Dies ist vom Anwendungsfall, insbesondere von der physikalischen und chemischen Zusammensetzung des Arbeitsfluids, abhängig.

Hierbei kommt beispielsweise der Oberflächenrauhigkeit der Oberflächenstruktur eine ganz besondere Bedeutung zu. Der Grad der Benetzung eines Bereichs der Kanalwand ist über die Oberflächenrauhigkeit einstellbar. Die Oberflächenrauhigkeit wird durch die Oberflächenstruktur bestimmt, die durch Anordnung und Größe der Mikrokristalle auf der Oberfläche einstellbar ist. Die Oberflächenkräfte (Adhäsionskräfte) zwischen dem Arbeitsfluid und der Kanalwand mit der Oberflächenstruktur sind bei angepassten Rauhigkeitsparametern deutlich reduziert gegenüber einer nicht in dieser Weise strukturierten Kanalwandoberfläche bei herkömmlichen Strömungsmaschinen. Eine an das jeweilige Arbeitsfluid angepasste Einstellung einer Oberflächenrauhigkeit führt somit zu einer durch das Arbeitsfluid unbenetzbaren Oberflächenstruktur mit den bereits genannten Vorteilen. Das Arbeitsfluid kann bei der Wechselwirkung mit der strukturierten Oberfläche hierbei in gas- oder dampfförmiger oder in flüssiger Form vorliegen.

Die auf eine Turbinenschaufel gerichtete Aufgabe wird erfindungsgemäß gelöst durch eine Turbinenschaufel mit einer von einem Arbeitsfluid beaufschlagbaren Schaufeloberfläche, wobei die Schaufeloberfläche zumindest bereichsweise eine durch das Arbeitsfluid unbenetzbare Oberflächenstruktur aufweist.

Die Vorteile einer solchen Turbinenschaufel ergeben sich entsprechend den Ausführungen zur Strömungsmaschine.

Nachfolgend werden Ausführungsbeispiele der Erfindung anhand einer Zeichnung näher erläutert. Darin zeigen:
- FIG 1: in einem Ausschnitt eine Längsansicht einer Strömungsmaschine,
- FIG 2: eine Turbinenschaufel,
- FIG 3A bis FIG 3C: jeweils in einem Ausschnitt eine Schnittansicht der in FIG 2 gezeigten Turbinenschaufel entlang der Schnittlinie III-III, und
- FIG 4A bis FIG 4C: jeweils eine den Figuren 3A bis 3C entsprechende Schnittansicht einer Turbinenschaufel mit herkömmlicher Oberflächenstruktur.

Einander entsprechende Teile sind in allen Figuren mit den gleichen Bezugszeichen versehen.

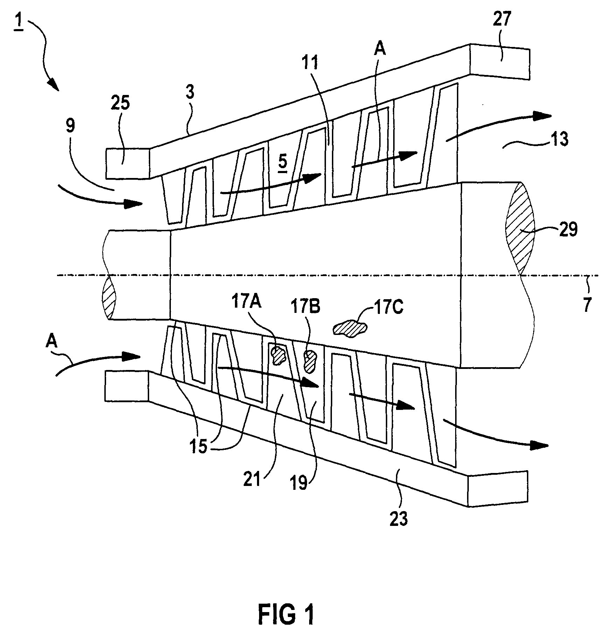

FIG 1 zeigt in einem Ausschnitt einen Längsschnitt einer Strömungsmaschine 1 am Beispiel einer Dampfturbine 3, beispielsweise einer Niederdruckdampfturbine. Entlang der Rotationsachse 7 aufeinander folgend weist die Dampfturbine 3 einen Einströmbereich 9 einen Beschaufelungsbereich 11, sowie einen Abströmbereich 13 auf. Weiter weist die Dampfturbine 3 einen Strömungskanal 5 auf, der von einer Kanalwand 15 begrenzt ist. Der Einströmbereich 9 der Beschaufelungsbereich 11 und der Abströmbereich 13 werden hierbei als Teilbereiche des Strömungskanals 5 aufgefasst. Im Beschaufelungsbereich 11 sind entlang der Längsachse 7 aufeinander folgend eine Anzahl von rotierbaren Laufschaufeln 19 und Leitschaufeln 21 angeordnet. Die Leitschaufeln 19 sind hierbei an der äußeren radialen Begrenzungsfläche einer Turbinenwelle 29 (Läufer) angeordnet. Die Leitschaufeln 21 sind an einem Leitschaufelträger 23 angeordnet, wobei der Leitschaufelträger 23 die Welle 29 mit den Laufschaufeln 19 in einem radialen Abstand umschließt, so dass der Strömungskanal entsprechend gebildet ist. Der Einströmbereich 9 wird radial von einem Einströmgehäuse 25 begrenzt, wobei das Einströmgehäuse 25 stromaufwärts mit dem Leitschaufelträger 23 verbunden ist. Stromabwärts ist ein Abströmgehäuse 27 vorgesehen, welches den Abströmbereich 13 in radialer Richtung begrenzt.

Im Betrieb der Dampfturbine 3 wird ein Arbeitsfluid A, z.B. ein heißer druckbeaufschlagter Dampf, dem Einströmbereich 9 zugestellt. Von dem Einströmbereich 9 strömt das Arbeitsfluid A in den Beschaufelungsbereich 5, wo es sich entlang der Rotationsachse 7 entspannt und dabei die Laufschaufeln 19 mit der Welle 29 in Rotation versetzt.

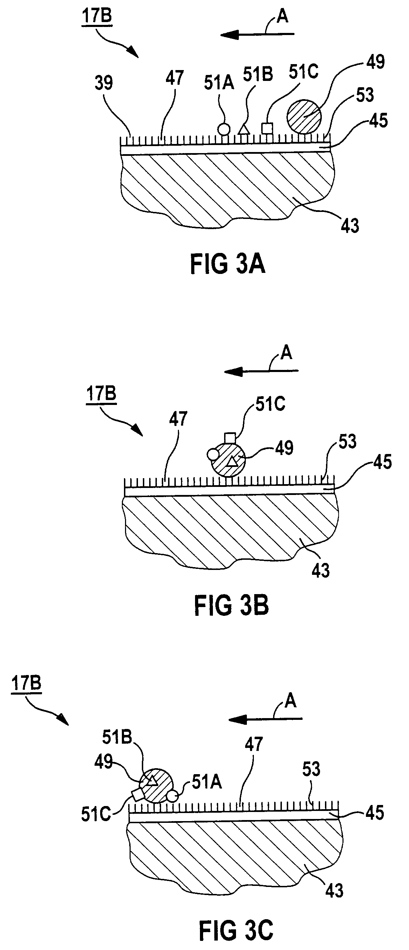

Zur Vermeidung von Strömungsverlusten und zur Erzielung eines Selbstreinigungseffektes in einer Dampfturbine 3 weist die Kanalwand 15 einen Kanalwandbereiche 17A, 17B, 17C auf. Dazu weisen die Kanalwandbereich 17A, 17B, 17C jeweils eine Oberflächenstruktur 47 (siehe Figuren 3A bis 3C) auf, die durch das Arbeitsfluid A unbenetzbar ist. Eine Leitschaufel 21 weist den Kanalwandbereich 17A auf. Eine Laufschaufel 19 weist den Kanalwandbereich 17B auf. Die Welle 29 umfasst einen Kanalwandbereich 17C. Die Kanalwandbereiche 17A, 17B, 17C sind exemplarisch und nur der Einfachheit halber als Teilbereiche der jeweiligen Turbinenkomponente 19,21,29 dargestellt. Es ist selbstverständlich, dass mit den eine durch das Arbeitsfluid A unbenetzbare Oberflächenstruktur 47 aufweisenden Kanalwandbereiche 17A, 17B, 17C auch andere Bereiche der Kanalwand 15 umfasst sein können. Insbesondere kann die gesamte den Strömungskanal 5 für das Arbeitsmedium A begrenzende Kanalwand 15 von den Kanalwandbereichen 17A, 17B, 17C umfasst sein.

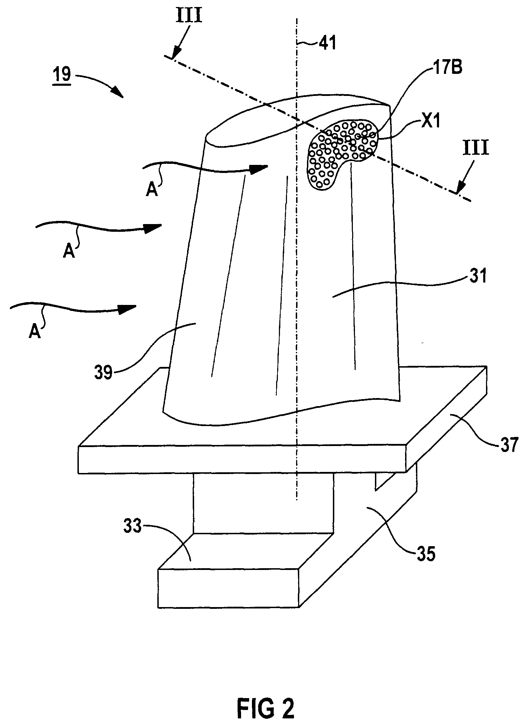

Eine Laufschaufel 19 der in FIG 1 gezeigten Dampfturbine 3, beispielsweise eine Niederdruckdampfturbine, ist in FIG 2 in einer perspektivischen Ansicht dargestellt. Die Laufschaufel 19 erstreckt sich entlang einer Schaufellängsachse 41. Entlang der Schaufellängsachse 41 sind aufeinander folgend ein Befestigungsbereich 33, eine Schaufelplattform 37 sowie ein Schaufelblattbereich 31 vorgesehen. Der Befestigungsbereich 33 weist einen Schaufelfuß 35 auf. Der Schaufelfuß 35 ist in Form eines Hammerkopfes ausgestaltet. Alternative Ausgestaltungen des Schaufelfußes 35, beispielsweise als Schwalbenschwanz oder Tannenbaumfuß, sind möglich. Mit dem Schaufelfuß 35 ist die Schaufel 19 am Läufer 29 der Dampfturbine 3 befestigbar (siehe FIG 1). Die Laufschaufel 19 weist eine Schaufeloberfläche 39 auf. Die Schaufeloberfläche 39 ist zumindest teilweise von dem Schaufelblattbereich 31 und der Schaufelplattform 37 gebildet. Beim Einsatz der Laufschaufel 19 in der Dampfturbine 3 ist die Schaufeloberfläche 39 von der Kanalwand 15 umfasst.

Im Betrieb der Laufschaufel 19 ist die Schaufeloberfläche 39, insbesondere der Schaufelblattbereich 31 mit dem Arbeitsfluid A, der Heißdampf der Dampfturbine 3, beaufschlagt. Zur Verringerung von Strömungsverlusten und zur Erzielung eines Selbstreinigungseffektes weist die Laufschaufel 19 einen Kanalwandbereich 17B auf. Der Kanalwandbereich 17B ist hierbei im Schaufelblattbereich 31 gebildet. Der Kanalwandbereich 17B weist eine Oberflächenstruktur 47 auf, die durch das Arbeitsfluid A unbenetzbar ist. Hierzu ist die Schaufeloberfläche 39 im Kanalwandbereich 17B mit der Oberflächenstruktur 47 strukturiert. Dies ist anhand der Einzelheit X1 in der FIG 2 schematisch und in vergrößerter Darstellung veranschaulicht. Bei der Strukturierung der Schaufeloberfläche 39 im Kanalwandbereich 17B wird der "Lotus-Effekt" gezielt ausgenutzt, um die Strömungsverluste durch Oberflächenreibung zu minimieren und zusätzlich einen Selbstreinigungseffekt zu erreichen.

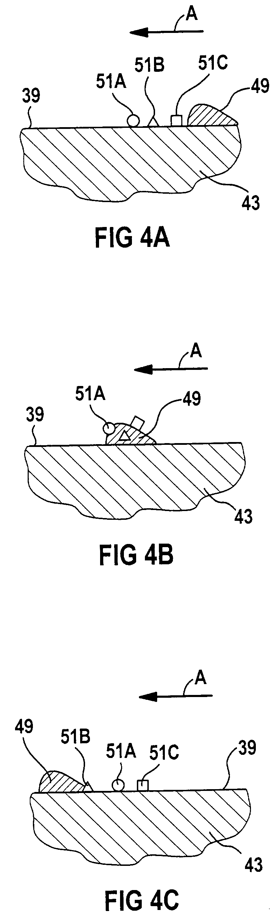

In den Figuren 3A bis 3C ist jeweils in einem Ausschnitt die Einzelheit X1 der Turbinenschaufel 19 entlang der Schnittlinie III-III dargestellt, um den Selbstreinigungseffekt des gemäß der Erfindung präparierten Kanalwandbereichs 17B näher zu erläutern. Zum Vergleich hierzu zeigen die Figuren 4A bis 4C entsprechende Darstellungen einer herkömmlichen, unpräparierten Schaufeloberfläche 39. Die in der Figur 3A gezeigte Schaufeloberfläche 39 weist in dem Kanalwandbereich 17B eine durch das Arbeitsfluid A unbenetzbare Oberlächenstruktur 47 auf. Diese Oberflächenstruktur 47 begrenzt den Strömungskanal 5 für das Arbeitsfluid A (vgl. FIG 1). Die Oberflächenstruktur 47 ist von einer Schicht 45 aus Mikrokristallen 53, beispielsweise epicuticularen Wachskristallen oder äquivalente Kristallstrukturen, gebildet. Die Schicht 45 weist dabei eine Oberflächenrauhigkeit auf, die gezielt auf eine Unbenetzbarkeit durch das Arbeitsfluid A abgestimmt ist. Dies hat zur Folge, dass im Betrieb der Dampfturbine 3 das Arbeitsfluid A die Schaufeloberfläche 39 im Kanalwandbereich 17B nicht benetzt. Strömungswiderstände sind dadurch erheblich reduziert. Zudem ist ein Reinigungseffekt zu beobachten, der im Folgenden anhand der Sequenz der Figuren 3a bis 3c erläutert wird:

Betriebsbedingt kommt es nämlich zur Ablagerung von Partikeln 51A, 51B, 51C an der Oberfläche 39. Diese Verunreinigungen 51A, 51B, 51C verursachen bei einer herkömmlich ausgestalteten Kanalwand einen verschmutzungsbedingten Wirkungsgradabfall einer Strömungsmaschine 3. Durch die Oberflächenstruktur 47 mit den Mikrokristallen 53 kann jedoch ein Fluid-Mikrotropfen 49 im Kanalwandbereich 17B nicht auf der Schaufeloberfläche 39 anhaften, da aufgrund der eingestellten Oberflächenrauhigkeit Adhäsionskräfte zwischen dem Fluid-Mikrotropfen 49 und der Schaufeloberfläche 39 nicht auftreten, zumindest jedoch stark unterdrückt sind. Somit sind die Fluid-Mikrotropfen 49 entlang der Mikrostruktur 47 beweglich. Somit kann ein Fluid-Mikrotropfen 49, beispielsweise infolge von Strömungskräften entlang der Strömungsrichtung des Arbeitsfluids A angetrieben, im Kanalwandbereich 17B entlang der Schaufeloberfläche 39 entlang perlen und dabei die Partikel 51A, 51B, 51C auf nehmen und aus dem Kanalwandbereich 17B wegtransportieren. Die Verunreinigungen 51A, 51B, 51C können sich somit nicht dauerhaft auf der Schaufeloberfläche 39 ablagern. Mit der die Mikrokristalle 53 aufweisenden Oberflächenstruktur 47 ist mithin ein Selbstreinigungseffekt im Betrieb einer Strömungsmaschine 1 erreicht. Im Falle einer Dampfturbine 3, beispielsweise einer Niederdruckdampfturbine, besteht ein Fluid-Mikrotropfen 49 überwiegend aus Wasser. Bei der Anwendung der Oberflächenstruktur 47 beispielsweise in einer Gasturbine ist in analoger Weise ein Selbstreinigungseffekt aufgrund der verminderten Gasreibung zu erwarten. Die Erfindung ist mithin sowohl auf gas- oder dampfförmige, als auch auf flüssige Phasen eines Arbeitsfluids A anwendbar. Die Schicht 45 mit Mikrokristallen 53 kann hierbei auf den Grundwerkstoff 43 der Turbinenschaufel 19, beispielsweise eine hochtemperaturfeste Legierung oder ein Edelstahl, mittels eines Beschichtungsverfahrens aufgebracht sein. Eine Schicht 45 mit Mikrokristallen 53 kann aber auch direkt mittels Strukturierung des Grundwerkstoffs 43, beispielsweise durch Mikro- oder Nanotechnologie, realisiert sein. Auch ist die Aufrüstung herkömmlicher Turbinenschaufeln 19, 21, beispielsweise mit einer einfachen Beschichtung oder einem Anstrich, zur Erreichung des gewünschten "Lotus-Effektes" möglich.

Im Vergleich dazu zeigt die Sequenzen Figuren 4A bis 4C die Oberfläche 39 einer herkömmlichen Laufschaufel 19 bei Beaufschlagung mit dem Arbeitsfluid A. Der Zusammenhang zwischen Rauhigkeit und Selbstreinigung ist klar ersichtlich. Während auf der weitgehend glatten Schaufeloberfläche 39 die Schmutzpartikel 51A, 51B, 51C (FIG 4A) durch den Fluid-Mikrotropfen 49 nur verlagert werden, haften sie sich auf der rauen Schaufeloberfläche 39 (FIG 3A) mit der Oberflächenstruktur 47 am Fluid-Mikrotropfen 49 und werden von dem Fluid-Mikrotropfen 49 beim Abrollen oder Abperlen von der Schaufeloberfläche 39 mitgetragen und so abgewaschen. Diese Verringerung der Adhäsion eines Fluid-Mikrotropfens 49 und partikelförmigen Kontaminationen 51A, 51B, 51C ist mit den in den Figuren 4A bis 4C gezeigten herkömmlichen Schaufeloberflächen 39 nicht erreichbar.

## Patentansprüche

1. Strömungsmaschine (1) mit einem Strömungskanal (5) für ein Arbeitsfluid (A), welcher von einer Kanalwand (15) mit einer zumindest bereichsweise durch das Arbeitsfluid (A) unbenetzbaren Oberflächenstruktur (47) begrenzt ist.

2. Strömungsmaschine (1) nach Anspruch 1,
wobei die Kanalwand (5) eine die Oberflächenstruktur (47) aufweisende Turbinenschaufel (19, 21) aufweist.

3. Strömungsmaschine (1) nach Anspruch 1 oder 2,
wobei die Oberflächenstruktur (47) von einer Schicht (45) aus Mikrokristallen (53), insbesondere epicuticularen Wachskristallen, gebildet ist, wobei die Schicht eine Oberflächenrauhigkeit aufweist, die gezielt auf eine Unbenetzbarkeit durch das Arbeitsfluid (A) abgestimmt ist.

4. Turbinenschaufel (19, 21) mit einer von einem Arbeitsfluid (A) beaufschlagbaren Schaufeloberfläche (39), wobei die Schaufeloberfläche (39) zumindest bereichsweise eine durch das Arbeitsfluid (A) unbenetzbare Oberflächenstruktur (47) aufweist.
